Europäisches Patentamt

(19) European Patent Office    (11) Publication number: **0 273 905**

Office européen des brevets    **B1**

(12)    **EUROPEAN PATENT SPECIFICATION**

(45) Date of publication of patent specification: **19.12.90**    (51) Int. Cl.⁵: **G 01 F 25/00**

(21) Application number: **86904903.1**

(22) Date of filing: **01.09.86**

(86) International application number:
**PCT/GB86/00518**

(87) International publication number:
**WO 87/01446 12.03.87 Gazette 87/06**

(54) **IMPROVEMENTS IN HYDROSTATIC TANK GAUGE SYSTEMS.**

(30) Priority: **04.09.85 GB 8521999**

(43) Date of publication of application:
**13.07.88 Bulletin 88/28**

(45) Publication of the grant of the patent:
**19.12.90 Bulletin 90/51**

(84) Designated Contracting States:
**AT BE CH DE FR GB IT LI LU NL SE**

(56) References cited:
**DE-A-2 424 839**
**US-A-3 596 680**
**US-A-4 336 825**

(73) Proprietor: **THE FOXBORO COMPANY**
**38 Neponset Avenue**
**Foxboro, MA 02035 (US)**

(72) Inventor: **WOOD, Graeme, Gillam**
**18 Essenden Road**
**South Croydon CR2 0BU (GB)**
Inventor: **HIGHAM, Edward, Hall**
**20 Priory Drive Reigate**
**Surrey RH2 8AF (GB)**
Inventor: **JELFFS, Peter, Albert, Milton**
**Coombe Cottage The Street**
**Compton Guildford, Surrey (GB)**

(74) Representative: **Cooke, William Douglas et al**
**Hughes Clark & Co. 63 Lincoln's Inn Fields**
**London WC2A 3JU (GB)**

EP 0 273 905 B1

Courier Press, Leamington Spa, England.

## Description

This invention relates to the calibration and diagnosis of (ie. determination of faults in) hydrostatic tank gauge systems. Such systems are used on large storage tanks for feedstocks and finished products, particularly in oil refineries and chemical and petrochemical plants. Compared with other systems, they are mechanically simple, having no moving parts, no intank components, and can use traditional pressure transmitters. Access to the sensors is possible without the necessity for taking the tank out of service and a variety of system diagnostics can be used.

Hydrostatic tank gauge systems comprise a plurality of pressure sensors, for example, two, at different levels on the tank to sense the hydrostatic pressures at those levels and a further pressure sensor for sensing the vapour pressure above the liquid surface. There is also at least one temperature sensor. Signals from the sensors are usually transmitted electrically to a tank processing unit which may be at a considerable distance, wherein values of liquid mass, density, level and volume are automatically computed according to simple formulae. The results of such computation may be displayed locally at the tank or transmitted to other units for further manipulation and display. These computed values can be used in a process control apparatus for controlling, for example, the supply of liquid to the tank.

It is highly desirable for two features of the system to be very accurately calibrated, when the system is in use out-of-doors and using the simplest equipment that may be made portable. The first of these two features is the height between two pressure sensors at different datum levels relative to the tank base. One object of the invention is, therefore, to enable this height to be precisely measured during the installation of the system and more particularly afterwards.

The second of the aforesaid two features is one which should be essential for the approval or certification of the system, and consists in an in-situ method of verifying the sensor performance in relation to a standards organisation. Traditional methods of checking the pressure sensors are not adequate because reliable standard pressure cannot be applied in the field with the necessary accuracy (better than 5 parts in 10,000=0.05%).

An apparatus using two stand pipes mounted as a permanent structure in relation to a boiler for responding to the level of water in the boiler has been described in US 4336825.

According to the invention, apparatus for the calibration of and determination of faults in an hydrostatic tank gauge system mounted on a tank for containing liquid, the system comprising at least two external pressure sensors connected by separate passages to the inside of the tank respectively at different levels which, in respect of said two external pressure sensors, are separated by a fixed, measured, vertical distance, the apparatus being characterised by a single stand pipe for calibrating the two pressure sensors, two block valves respectively interposed between the two sensors and the tank in the associated passages, each block valve being operable completely to block or to provide communication between the associated pressure sensor and tank, the stand pipe being arranged to intersect the two passages between the two pressure sensors and the block valves and valve means mounted for cutting off communication between the two passages and stand pipe, whereby the two sensors can be subjected either to the pressure of liquid in the tank or to a selected calibration liquid when contained in the stand pipe according to the setting of said block valves and valve means.

According also to the invention there is provided a method for the calibration of and determination of faults in an hydrostatic tank gauge system mounted on a tank containing liquid, the system comprising at least two pressure sensors connected by passages to the inside of the tank respectively at different fixed datum levels above the tank base, the method being characterised by mounting a single stand pipe for calibrating the two pressure sensors so that it intersects while being in communication with the passages between the pressure sensors and the tank, blocking the passages between the stand pipe and tank by block valves operable completely to block or provide communication between the tank and stand pipe, connecting by the operation of valve means the pressure sensors with the stand pipe, inserting a calibration liquid traceable to a standards organisation into the stand pipe whereby each pressure sensor registers the head of calibration liquid above its level of operation in relation to the tank, measuring the temperature of the calibration liquid and computing therefrom the actual density of the calibration liquid from its accurately known density at a standard temperature and using the registered pressures and actual density to compute the separation of the sensor levels or the height of the calibration liquid in the stand pipe.

The method can be extended for the identification of errors in the range of values indicated by the linearity or zero of each pressure sensor or in the separation of the pressure sensor levels by repeating the method with the calibration fluid at different heads or with calibration fluids of different densities.

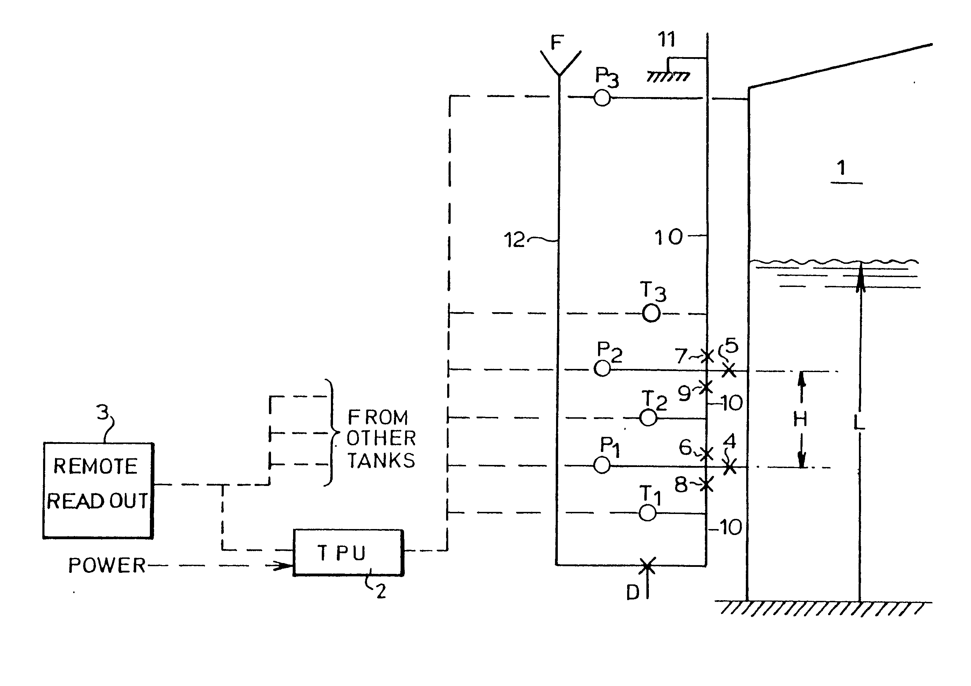

In order that the invention may be clearly understood and readily carried into effect, one apparatus and method in accordance therewith will now be described, by way of example, with reference to the accompanying drawing, which is a diagrammatic elevation of one side of a tank fitted with an hydrostatic tank gauge system.

Referring to the drawing, a tank 1 is furnished with pressure sensors $P_1$, $P_2$ connected by horizontal passages to the tank wall at fixed points separated vertically by a height H and a third pressure sensor $P_3$ responsive to vapour pressure above the surface of liquid in the tank. Electrical signals from the sensors $P_1$, $P_2$, $P_3$ are transmitted to a tank processing unit 2 whereat the liquid level can be computed from the sensed pressures and known height H. The liquid density can also be computed from these values and the density corrected for temperature variation using a further signal giving the liquid temperature by means not shown. These values obviously also enable the liquid volume to be computed from the known tank dimensions.

From the above it will be seen that the values indicated depend essentially on the calibration of the sensors $P_1$, $P_2$, $P_3$ and the measurement H. Therefore a calibration system described below is mounted.

Block valves 4, 5 are interposed between the tank 1 and sensors $P_1$, $P_2$ to enable the sensors to be isolated from the liquid in the tank, these block valves being arranged either to block or to provide communication between the sensors $P_1$, $P_2$ and the tank. Vent valves 6, 7 and drain valves 8, 9 communicate respectively with the passages between the block valve 4 and sensor $P_1$ and block valve 5 and sensor $P_2$. Flexible tubing 10 supported by a support 11 leads to the vent valve 7, and also connects the drain valve 9 to the vent valve 6 and the drain valve 8 to a drain valve D. Temperature sensors $T_1$, $T_2$, $T_3$ are connected to the tubing 10 above, between and below the pressure sensors $P_1$, $P_2$, with local indication of tube internal temperature or remote transmission to the tank processing unit. To calibrate the sensors $P_1$, $P_2$ a calibration fluid is introduced into the tubular column 10 which is a stand pipe that enables pressures to be read under precisely known heads.

The calibration fluid must be safe to handle and acceptable as a minor impurity for the tank contents, it must be clean, pure and have a known density traceable to a standard reference such as the National Standards Laboratory at Teddington, England, which has very precise means for determining the mass and density of a liquid and have a known density to temperature relationship for the ambient temperature obtained around the tank. In most cases distilled water is a suitable calibration fluid. The flexible tubing may if required be replaced by rigid tubing.

The flexible or rigid tubing which for many applications may have an internal diameter of 18 mm (3/4 inch), must have a clean internal passageway and be acceptable for use with the chosen calibration fluid. It must be flexible enough to be attached and clamped to the vent and drain valves and to "T" connectors for the temperature sensors $T_1$, $T_2$, $T_3$. Clear pipe of plastics material is suitable for this tubing.

A further length of flexible tubing 12 is connected between a point as high as the maximum head required in the tubing 10 and the drain valve D to enable the tubing to receive the required calibration fluid by way of a funnel F or feed container at the top of the tubing 12.

When beginning the calibration procedure the block valves 4, 5 are closed to isolate the sensors $P_1$, $P_2$ from the tank. The vent valves 6, 7 and drain valves 8, 9 are opened, as well as the drain valve D to drain tank fluid from the sensors and associated connecting pipes. The valve D is then closed. The sensors and tubing are then flushed by calibration fluid inserted through the funnel F, any remaining tank fluid being ejected through the top of the tubing 10. The funnel F is then raised and lowered (for example by a rope) to sluice calibration fluid through the system as often as necessary. Fresh calibration fluid is next fed through the funnel F to a level above the sensor $P_2$. This filling upwards through the tubing 10 is important to avoid trapping air in the system.

The average temperature of the calibration fluid is read from the temperature sensors $T_1$, $T_2$, $T_3$ either directly in the tank processor or externally. In either event, a correction is made if the temperature differs from that at which the fluid density is known precisely. If the temperature gradient among the sensors $T_1$, $T_2$, $T_3$ is greater than 0.5°C then the tubing should be drained and refilled to ensure a more even temperature distribution. The actual density, as well as the pressures registered by the sensors $P_1$, $P_2$, are entered into the tank processor which can immediately calculate the actual height H from the formula $P_1 - P_2 = \rho H$ where $\rho$ represents the density of the calibration fluid.

The above described system is very convenient for field use but a more permanent stand pipe including the vent and drain valves and a pump can be used for feeding the calibration fluid into the stand pipe and, if necessary, for circulating the calibration fluid to achieve an even temperature.

The above method can be extended to isolate errors or drifts in pressure sensors by taking multiple readings using different densities of traceable testing fluid. Where the third pressure sensor $P_3$ is conveniently placed, with the same arrangement of vent, drain and block valves the principle can be used to get separate readings from the different pairs of pressure sensors ($P_1$, $P_2$ or $P_1$, $P_3$ or $P_2$, $P_3$).

The fluid in the stand pipe can be filled to one level position and the pressure readings noted. Then the fluid pressure can be changed to another value by altering the fluid level and the pressure readings again noted. The change in fluid level can thereby be obtained accurately from the four pressure readings.

By repeating the tests with sufficient changes on the level or density or both of the calibration fluid, identification of errors in the range of values indicated by the linearity and zero of each sensor and of the vertical separation constant H can be accurately obtained.

It will be appreciated that the above tests could not be effected while using the actual fluid in the tank, not only because this would not be traceable to an actual standards organisation, but because of the substantial temperature changes and currents in the liquid inside the tank.

## Claims

1. Apparatus for the calibration of and determination of faults in an hydrostatic tank gauge system mounted on a tank (1) for containing liquid, the system comprising at least two external pressure sensors ($P_1$, $P_2$, $P_3$) connected by separate passages to the inside of the tank respectively at different levels which, in respect of said two external pressure sensors ($P_1$, $P_2$) are separated by a fixed, measured, vertical distance (H), the apparatus being characterised in that it comprises a single stand pipe for calibrating the two pressure sensors, two block valves (4, 5) respectively interposed between said two sensors ($P_1$, $P_2$) and tank in the associated passages, each block valve being operable completely to block or to provide communication between the associated pressure sensor and tank, the stand pipe (10) being arranged to intersect the two passages between the two pressure sensors and the block valves and valve means (6, 7, 8, 9) mounted for cutting off communication between the two passages and stand pipe, whereby the two sensors can be subjected either to the pressure of liquid in the tank or to a selected calibration liquid which is contained in the stand pipe according to the setting of said block valves and valve means.

2. Apparatus according to Claim 1, characterised in that the stand pipe is made of flexible tubing.

3. Apparatus according to Claim 2, characterised in that the flexible tubing is divided into three parts and that the valve means comprise a drain valve (8) interposed between the lower passage and the lowermost part of the tubing, a vent valve (6) interposed between the lower passage and the bottom of the central part of the tubing, a drain valve (9) interposed between the upper passage and the top of the central part of the tubing and a vent valve (7) interposed between the upper passage and the bottom of the top part of the tubing.

4. Apparatus according to any one of the preceding claims, characterised in that it is provided with means for inserting calibration liquid into the stand pipe from the bottom end of the stand pipe and for completely draining the stand pipe at a point below the pressure sensors.

5. Apparatus according to Claim 4, characterised in that the means for inserting calibration liquid into the stand pipe comprise a length (12) of flexible tubing connected to the bottom of the stand pipe (10) and extending upwards to a location (F) above the highest level to be reached by liquid in the tank and down which length (12) of flexible tubing the calibration liquid can be poured.

6. Apparatus according to any one of the preceding claims, characterised in that at least one temperature sensor ($T_1$, $T_2$, $T_3$) is mounted on the stand pipe whereby the temperature of the calibration liquid can be ascertained.

7. A method for the calibration of and determination of faults in an hydrostatic tank gauge system mounted on a tank containing liquid, the system comprising at least two pressure sensors ($P_1$, $P_2$) connected by passages to the inside of the tank (1) respectively at different fixed datum levels above the tank base, the method being characterised by mounting a single stand pipe (10) for calibrating the two pressure sensors so that it intersects while being in communication with the passages between the pressure sensors and the tank, blocking the passages between the stand pipe and tank by block valves (4, 5) operable completely to block or provide communication between the tank and stand pipe, connecting by the operation of valve means (6, 7, 8, 9) the pressure sensors with the stand pipe, inserting a calibration liquid traceable to a standards organisation into the stand pipe whereby each pressure sensor registers the head of calibration liquid above its level of operation in relation to the tank, measuring the temperature of the calibration liquid and computing therefrom the actual density of the calibration liquid from its accurately known density at a standard temperature and using the registered pressures and actual density to compute the separation of the sensor levels or the height of the calibration liquid in the stand pipe.

8. A method according to Claim 7, characterised in that errors in the range of values indicated by the linearity or zero of each pressure sensor or the separation of the pressure sensor levels are identified by repeating the method with the calibration liquid at different heads or with calibration liquids of different densities.

9. A method according to Claim 7 or Claim 8, characterised in that the calibration fluid is distilled water.

## Patentansprüche

1. Vorrichtung zum Eichen und Überprüfen von Fehlern in einem hydrostatischen Tank-Meßgerät, welches an einem Flüssigkeitsbehälter (1) befestigt ist, diese Vorrichtung enthält wenigstens zwei externe Drucksensoren (P1, P2, P3), die über zwei getrennte Kanäle mit dem Inneren des Tanks verbunden sind, welche auf zwei verschiedenen Niveaus, bezogen auf die zwei äußeren Drucksensoren (P1, P2), eine festgelegte, ausgemessene, vertikale Distanz (H) weit auseinanderliegen, dadurch gekennzeichnet, daß die Vorrichtung aus einem einzelnen Standrohr zur Eichung der beiden Drucksensoren besteht sowie aus zwei Absperrventilen (4, 5), die zwischen den beiden Drucksensoren (P1, P2) und dem Tank innerhalb der verbundenen Kanäle angeordnet sind. Jedes Absperrventil ist in der Lage, eine Verbindung zwischen den verbundenen Drucksensoren und dem Tank herzustellen oder zu unterbrechen und aus einem Standrohr (10), welches so angeordnet ist, daß es die zwei Kanäle zwischen den beiden Drucksensoren und den Absperrventilen durchkreuzt und aus Ventilmitteln (6, 7, 8, 9), die zum Trennen der Verbindung zwischen den zwei Kanälen und dem Standrohr dienen, wobei die zwei Sensoren entweder dem Flüssigkeitsdruck im Tank oder eine Eichflüssigkeit unterworfen sind, die in dem Standrohr zur Einstellung der Absperrventile und Ventilmittel enthalten ist.

2. Vorrichtung nach Anspruch 1, dadurch gekennzeichnet, daß das Standrohr aus einem flexiblen Röhrenmaterial hergestellt ist.

3. Vorrichtung nach Anspruch 2, dadurch gekennzeichnet, daß die flexible Röhre in drei Teile unterteilt ist und daß die Ventilmittel ein Abflußventil (8) beinhalten, welches zwischen dem unteren und dem ganz unteren Teil der Röhre angeordnet ist, sowie ein Entlüftungsventil (6), welches zwischen dem unteren Kanal und der Ebene des zentralen Teils der Röhre angeordnet ist und ein Abflußventil (9), welches zwischen dem oberen Kanal und der Ebene des oberen Teils der Röhre angeordnet ist.

4. Vorrichtung nach einem der vorhergehenden Ansprüche, dadurch gekennzeichnet, daß er mit Mitteln am unteren Ende des Standrohres zum Aufnehmen der Eichflüssigkeit in das Standrohr und etwas unterhalb der Drucksensoren zur vollständigen Entleerung des Standrohres ausgestattet ist.

5. Vorrichtung nach Anspruch 4, dadurch gekennzeichnet, daß die Mittel zum Aufnehmen der Eichflüssigkeit in das Standrohr eine flexible Röhre der Länge (12) umfassen, die mit dem Boden des Standrohres (10) verbunden ist und sich aufwärts bis zum Punkt F über den höchsten Pegel, der von der Flüssigkeit im Tank erreicht wird, erstreckt, wobei in die Röhre der Länge (12) die Eichflüssigkeit geschüttet werden kann.

6. Vorrichtung nach einem der vorhergehenden Ansprüche, dadurch gekennzeichnet, daß wenigstens ein Temperatur-Sensor (T1, T2, T3) an dem Standrohr befestigt ist, so daß die Temperatur der Eichflüssigkeit bestimmt werden kann.

7. Verfahren zum Messen und Überprüfen von Fehlern in einem hydrostatischen Tank-Meßgerät, welches an einem Flüssigkeitstank befestigt ist, diese Vorrichtung enthält wenigstens zwei Drucksensoren (P1, P2) auf verschiedenen, festgelegten Niveaus oberhalb des Behälterbodens, dadurch gekennzeichnet, daß ein einzelnes Standrohr (10) zur Eichung der beiden Drucksensoren so aufgebaut wird, daß es sich zur Verbindung mit den Kanälen zwischen den Drucksensoren und dem Tank unterteilt und daß die Kanäle zwischen dem Standrohr und dem Tank durch Absperrventile (4, 5) blockiert werden, die in der Lage sind, die Verbindung zwischen dem Tank und dem Standrohr herzustellen oder zu unterbrechen, und daß durch den Einsatz der Ventilmittel (6, 7, 8, 9) die Drucksensoren mit dem Standrohr verbunden werden, sowie daß bei Standard-Operationen eine nachweisbare Flüssigkeit in das Standrohr eingefüllt wird, wobei jeder Drucksensor die Höhe der Eichflüssigkeit oberhalb seines Arbeitspunktes, bezogen auf den Tank, registriert und daß die Temperatur der Eichflüssigkeit gemessen wird und damit die aktuelle Dichte der Eichflüssigkeit von seiner exakt bekannten Dichte bei Normaltemperatur berechnet wird und daß unter Verwendung der gemessenen Drücke und der aktuellen Dichte der Abstand der Sensoren-Niveaus oder die Höhe der Eichflüssigkeit in dem Standrohr berechnet werden kann.

8. Verfahren nach Anspruch 7, dadurch gekennzeichnet, daß die Fehler im Bereich der Werte, die in der Linearität oder in der Nullpunkteinstellung eines jeden Drucksensors oder im Abstand der Sensoren-Niveaus liegen, durch die Wiederholung der Methode mit der Eichflüssigkeit bei unterschiedlichen Höhen oder mit Eichflüssigkeiten von unterschiedlichen Dichten herausgefunden werden.

9. Verfahren nach Anspruch 7 oder 8, dadurch gekennzeichnet, daß als Eichflüssigkeit destilliertes Wasser verwendet wird.

**Revendications**

1. Appareil pour l'étalonnage et la détermination de défauts dans un système indicateur de niveau de réservoir hydrostatique monté sur un réservoir (1) destiné à contenir un liquide, le système comprenant au moins deux détecteurs de pression extérieurs (P$_1$, P$_2$, P$_3$) reliés par des passages séparés à l'intérieur du réservoir à des niveaux respectifs différents qui, par rapport aux deux détecteurs de pression extérieurs (P$_1$, P$_2$), sont séparés par une distance verticale fixe mesurée (H), appareil caractérisé en ce qu'il comprend un tube droit vertical unique pour étalonner les deux détecteurs de pression, deux vannes d'arrêt (4, 5) interposées respectivement entre les deux détecteurs (P$_1$, P$_2$) et le réservoir dans les passages associés, chaque vanne d'arrêt pouvant fonctionner pour bloquer complètement ou pour assurer la communication entre le détecteur de pression associé et le réservoir, le tube droit vertical (10) étant disposé de manière à couper les deux passages entre les deux détecteurs de pression et les vannes d'arrêt, et des moyens de vannes (6, 7, 8, 9) montés de manière à couper la communication entre les deux passages et le tube droit vertical, ce qui permet ainsi aux deux détecteurs d'être soumis soit à la pression du liquide se trouvant dans le réservoir, soit à un liquide d'étalonnage sélectionné contenu dans le tube droit vertical, suivant le réglage des vannes d'arrêt et des moyens de vannes.

2. Appareil selon la revendication 1, caractérisé en ce que le tube droit vertical est constitué d'une conduite flexible.

3. Appareil selon la revendication 2, caractérisé en ce que la conduite flexible est divisée en trois parties et en ce que les moyens de vannes comprennent une vanne de vidange (8) interposée entre le passage inférieur et la partie la plus basse de la conduite, une vanne d'évacuation (6) interposée entre le passage inférieur et le bas de la partie centrale de la conduite, une vanne de vidange (9) interposée entre le passage supérieur et le sommet de la partie centrale de la conduite, et une vanne d'évacuation (7) interposée entre le passage supérieur et le bas de la partie supérieure de la conduite.

4. Appareil selon l'une quelconque des revendications précédentes, caractérisé en ce qu'il est muni de moyens permettant d'introduire le liquide d'étalonnage dans le tube droit vertical par l'extrémité inférieure de celui-ci, et de vidanger complètement ce tube droit vertical en un point situé au-dessous des détecteurs de pression.

5. Appareil selon la revendication 4, caractérisé en ce que les moyens permettant d'introduire le liquide détalonnage dans le tube droit vertical, comprennent une certaine longueur (12) d'une conduite flexible reliée du bas du tube droit vertical (10) et s'étendant vers le haut jusqu'à un point (F) situé au-dessus du niveau maximum que le liquide doit atteindre dans le réservoir, cette longueur (12) de conduite flexible permettant de vidanger vers le bas de fluide d'étalonnage.

6. Appareil selon l'une quelconque des revendications précédentes, caractérisé en ce qu'au moins un détecteur de température ($T_1$, $T_2$, $T_3$) est monté sur le tube droit vertical pour qu'on puisse ainsi déterminer avec certitude la température du liquide détalonnage.

7. Procédé pour l'étalonnage et la détermination de défauts dans un système indicateur de niveau de réservoir hydrostatique monté sur un réservoir contenant un liquide, le système comprenant au moins deux détecteurs de pression ($P_1$, $P_2$) reliés par des passages à l'intérieur du réservoir (1) à des niveaux déterminés fixes respectivement différents au-dessus de la base du réservoir, procédé caractérisé en ce qu'il consiste à monter un tube droit vertical unique (10) destiné à étalonner les deux détecteurs de pression de façon que ce tube droit vertical coupe les passages entre les détecteurs de pression et le réservoir tout en restant en communication avec ceux-ci, à bloquer les passage entre le tube droit vertical et le réservoir par des vannes d'arrêt (4, 5) manoeuvrables pour bloquer complètement ou pour assurer la communication entre le réservoir et le tube droit vertical, à relier les détecteurs de pression au tube droit vertical en manoeuvrant des moyens de vannes (6, 7, 8, 9), à introduire un liquide d'étalonnage référençable à une organisation normalisée dans le tube droit vertical de façon que chaque détecteur de pression enregistre la charge du liquide d'étalonnage au-dessus de son niveau de fonctionnement par rapport au réservoir, à mesurer la température du liquide d'étalonnage et à calculer à partir de cette température la densité réelle du liguide détalonnage d'après sa densité connue avec précision pour une température normalisée, et à utiliser les pressions enregistrées et la densité réelle pour calculer la distance de séparation entre les niveaux des détecteurs ou la hauteur du liquide d'étalonnage dans le tube droit vertical.

8. Procédé selon la revendication 7, caractérisé en ce qu'on identifie les erreurs dans la plage de valeurs indiquée par la linéarité ou le zéro de chaque détecteur de pression ou de la distance de séparation entre les niveaux des détecteurs de pression, en répétant la mise en oeuvre du procédé avec un liquide détalonnage sous des pressions différentes, ou avec des liquides d'étalonnage de densités différentes.

9. Procédé selon l'une quelconque des revendications 7 et 8, caractérisé en ce que le fluide d'étalonnage est de l'eau distillée.